# EUROPEAN PATENT SPECIFICATION

(11) **EP 1 725 645 B1**
(45) Date of publication and mention of the grant of the patent: **20.10.2010**
(21) Application number: 04721166.9
(22) Date of filing: 17.03.2004
(51) Int. Cl.: C11D 3/39, A01J 7/02

(54) **METHOD OF CLEANING EQUIPMENT FOR PRODUCING OR PROCESSING DAIRY PRODUCTS**
VERFAHREN ZUR REINIGUNG VON EINRICHTUNGEN ZUR HERSTELLUNG ODER VERARBEITUNG VON MILCHPRODUKTEN
PROCEDE DE NETTOYAGE D'EQUIPEMENT DESTINE A PRODUIRE OU A TRAITER DES PRODUITS LAITIERS

(43) Date of publication of application: 29.11.2006
(73) Proprietor: ECOLAB INC., St. Paul MN 55102-2233 (US)
(72) Inventor: BARDONESCHI, Gilbert, F-51300 Bassu (FR); LAROCHE, Bertrand, F-91370 Verrières le Buisson (FR); DESVOY-JOPPE, Béatrice, F-51240 Nuisement sur coole (FR)
(74) Representative: Gesthuysen, Michael
(86) International application number: PCT/EP2004/002757
(87) International publication number: WO 2005/090542

(56) References cited:
- DE-A- 19 804 829
- US-A- 5 855 217
- US-A1- 2001 009 664
- US-A1- 2002 119 574
- US-A1- 2003 064 911
- US-B1- 6 194 367
- US-B1- 6 686 164

## Description

The present invention refers to the field of the cleaning and sanitation of equipment for producing or processing dairy products, especially equipment used in milk industry, such as milking equipment.

Especially, according to a first aspect of the present invention, the present invention relates to methods of cleaning equipment for producing or processing dairy products.

Furthermore, according to a second aspect of the present invention, the present invention relates to the use of peroxides, preferably hydrogen peroxide, for the cleaning of equipment for producing or processing dairy products or for the activation of a lactoperoxidase system (LPS), respectively.

The producing and processing of dairy products are often problematic in view of a spoilage and microbiological contamination of the equipment used for this purpose. Thus, a high standard of hygiene and sanitation is needed; especially with respect to the producing or processing of dairy products on an industrial level, such as milking processes, where particularly adapted industrial equipment with a high level of technical complexity is used.

Due to the complexity of said equipment, substantial amounts of dairy products may remain within said equipment after processing or producing. This implicates a potential risk of spoilage and microbiological contamination within said equipment, thus leading to serious problems with respect to the quality and hygiene of the dairy products produced or processed within such equipment.

In order to overcome the aforementioned problems many efforts have been performed in the prior art. In this context, one conventional method consists of treating said equipment with a chlorine-containing solution in such a way that said equipment is initially pre-rinsed with substantial amounts of water and then rinsed with said chlorine-containing solution in order to remove dairy products remaining within or adhering to said equipment on the one hand and to ensure a certain disinfection, i.e. a decrease of pathogenic germs within said equipment, on the other hand. Finally, a post-rinse step with water is often required in order to remove excess chlorine. Due to hygiene requirements, a post-rinse step is mandatory by law in some countries.

However, this method exhibits particular disadvantages: The used chlorine-containing products are often instable with respect to their chemical properties. This makes them difficult to handle and furthermore leads to difficulties concerning the registration of said chlorine-containing formulations as biocides. Additionally, said chlorine-containing formulations may lead to the formation of so-called AOX-compounds (adsorbable organic halides), which are discussed to be problematic with respect to environment and human health. Furthermore, this prior art method is associated with several rinse steps, thus leading to high costs concerning energy, consumption of water as well as wastewater disposal or treatment, respectively.

Due to the aforementioned disadvantages associated with the use of chlorine-containing formulations, several attempts have been made to replace said chlorine-containing solutions for this purpose. However, new formulations which have been suggested in prior art to replace said chlorine-containing formulations are deemed to be even more cost-intensive than said chlorine-containing formulations, so that their application on an industrial level is economically not attractive.

For this reason, there is a need for a method of cleaning equipment for producing or processing dairy products. Said method to be provided should avoid or at least diminish the disadvantages related to the prior art processes discussed before, thereby ensuring a good effectiveness with respect to the cleaning and/or disinfection of said equipment.

Especially, there is a need for a cleaning method for equipment for producing or processing dairy products, which renounces the use of chlorine-containing solutions and furthermore requires no pre-rinse step and is thus associated with reduced expenditure and costs, especially due to a reduced water and energy consumption.

Applicant has now surprisingly found that the problems related to the prior art methods can be overcome by using hydrogen peroxide in the cleaning of equipment for producing or processing dairy products.

Thus, according to a first aspect of the present invention, the present invention relates to a method of cleaning equipment for producing or processing dairy products as defined by claim 1, said equipment being soiled with said dairy products, wherein said method comprises the step of treating said equipment with a solution containing hydrogen peroxide in the range of from 0.01 to 0.2% by weight. The treating of said equipment with said hydrogen peroxid-containing solution is performed in the presence of at least one lacto peroxidase and of at least one thiocyanate.

In general, said lactoperoxidase originates from said dairy products to be removed from said equipment. Also, said thiocyanate is in general a naturally occurring thiocyanate, originating from said dairy products to be removed from said equipment. With other words, according to the present invention, said lactoperoxidase, and said thiocyanate are resident per se within said dairy products to be removed from said equipment. This means that said lactoperoxidase, and said thiocyanate are naturally occurring and thus intrinsic factors of said dairy products.

According to the method of the present invention, the treating of said equipment with the hydrogen peroxide-containing solution may be performed without a preceding pre-rinse step. The renunciation of a pre-rinse step leads to the decisive advantage that enormous amounts of water are saved on the one hand. On the other hand, another crucial advantage is the time-optimization of the cleaning process on the basis of the absence of a pre-rinse step. On the whole, according to the method of the present invention, high amounts of costs are saved, thus leading to an economical improvement of the production and/or processing dairy products.

Furthermore, the method of the present invention is based on a natural biologic system inherent within the dairy products to be removed, thus leading to the decisive advantage that no further addition of specific disinfecting and cost-intensive chemicals exhibiting critical properties concerning e.g. human health, environment and influence on foodstuff is required.

The term "cleaning" used in the present invention refers both to the chemical and biological as well as to the mechanical removal of soils and contaminations contained within said equipment, said soils and contaminations originating from said dairy products. Especially, the term "cleaning" also comprises the disinfection, decontamination and/or sanitation of said equipment, especially the killing of microorganisms, such as pathogenic germs, and/or the prevention or inhibition of the growth thereof. Examples for respective microorganisms being affected by the method of the present invention are e.g. *Campylobacter jejuni, Salmonella typhimurium, Streptococcus mutans, Listeria monocytogenes, Esclaerichia coli* and *Staphylococcus aureus.*

The term "dairy products" generally refers to all kinds of dairy products. Such dairy products comprise e.g. milk, especially raw milk or processed milk, or products derived therefrom. Examples for processed milk are pasteurized milk, skimmed milk and long-life milk. Furthermore, the term "dairy products" also comprises diverse milk-containing products, e.g. cheese, curd cheese, yoghurt and milk-containing drinks.

The term "equipment" is to be understood in a broad manner, i.e. this term refers to all kinds of devices, apparatus, machines, pipes, hoses, conduits, tubes etc. used in the segment of the production and processing of dairy products, e.g. milking machines, milking collection tanks, fermenters etc.

The term "treating" is to be understood in a broad manner, i.e. this term refers to all kinds of treating methods. Especially, this term comprises the step(s) of contacting and/or rinsing the equipment with the peroxide containing solution.

In addition, lactoperoxidase, and thiocyanate(s) may be supplementarily added to the cleaning solution containing the hydrogen peroxide. As it will be discussed in the following, this supplementary addition may be performed in order to increase even more the effectiveness of cleaning with respect to the soiled and/or contaminated equipment. However, it is preferred that the peroxidase(s) and/or the thiocyanate(s) originate from the dairy products to be removed themselves.

According to a preferred embodiment, the hydrogen peroxide-containing solution is an aqueous solution since water is a cost-efficient solvent which is easy to handle and chemically compatible with peroxides and foodstuff.

In general, according to the present invention, the hydrogen peroxide is chosen with respect to its capability to activate the so-called lactoperoxidase system (LPS), as defined in the following. The peroxide used in the present invention is hydrogen peroxide, especially in the form of an aqueous, acidic solution.

The hydrogen peroxide-containing solution is an acidic solution, especially with a pH-value less than 7, preferably less than or equal 6, more preferably less than or equal 5. If necessary or required, the pH-value of said peroxide-containing solution may be adjusted to even lower values.

Acidic solutions are used according to the present invention in order to stabilize the hydrogen peroxide within said solution, which results in a prolonged shelf-life of said solutions and thus leads to an easy handling and storage of said peroxide-containing solutions.

Said hydrogen peroxide-containing solution may be acidified with at least one organic and/or inorganic acid or a respective buffer system. According to the present invention, a preferred inorganic acid comprises phosphoric acid and/or its salts.

According to the present invention, the amount of peroxide(s), especially hydrogen peroxide, in said peroxide-containing solution is selected such that the peroxide-containing solution has a sufficient cleaning and/or sanitation effect with respect to the equipment to be cleaned or disinfected, respectively. The peroxide concentration may be selected as a function of treating time, especially contacting time (i.e. duration for which the peroxide-containing solution remains in contact with the equipment to be cleaned) and thus as a function of the rate with which the peroxide-containing solution is rinsed through the equipment to be cleaned.

According to the present invention, the amount of hydrogen peroxide is in the range of from 0.01 to 0.2 % by weight, especially from 0.01 to 0.05 % by weight, preferably from 0.02 to 0.03 % by weight, based on the total weight of said solution.

Applicant has surprisingly found that hydrogen peroxide is an excellent agent for the cleaning of equipment for producing or processing dairy products. hydrogen peroxide, exhibits per se a certain disinfecting effect against microorganisms since they possess a high oxidizing potential. However, applicant has surprisingly found out that the effectiveness of said hydrogen peroxide is significantly increased - namely in a surprisingly synergistic manner - when it is used for the cleaning of equipment soiled with dairy products, said effect being probably due to the presence of lactoperoxidase and thiocyanate originating from said dairy products.

Without being bound to a specific theory, it is believed that the application of said hydrogen peroxide, leads to the activation of a so-called lactoperoxidase system (LPS), which acts as a naturally occurring inhibitor with respect to microorganisms, especially pathogenic germs. Said lactoperoxidase systems is in general a ternary system comprising (i) a particularly naturally occurring lactoperoxidase (LP); (ii) a particularly naturally occurring thiocyanate (SCN⁻); and (iii) a hydrogen peroxide. It is believed that said lactoperoxidase system (LPS) exhibits a certain antimicrobiological activity and thus acts as a natural disinfectant and/or inhibitor with respect to microorganisms on the basis of the lactoperoxidase catalyzed-oxidation of thiocyanate in the presence of hydrogen peroxide. The resulting hypothiocyanite anion (OSCN⁻) is considered to be possibly one of the disinfecting agents due to the oxidation of essential protein and sulfhydryl groups mediated by said hypothiocyanite anion.

The lactoperoxidase system (LPS) as such is known from prior art; however, its applicability in the cleaning of equipment for producing or processing dairy products has not been considered yet.

For example, the scientific publication by G. R. Siragusa and M. G. Johnson entitled "Inhibition of Listeria monocytogenes Growth by the Lactoperoxidase-Thiocyanate-H2O2 Antimicrobial System", Applied and Environmental Microbiology, November 1989, pages 2802 to 2805, describes a bacteriostatic effect of the lactoperoxidase system with respect to the gram-positive bacteria *Listeria monocytogenes.* The experimental data presented in this publication are based merely on pure in-vitro-experiments within the scope of fundamental research.

The article by R. L. Althaus et al. entitled "Analysis Time and Lactation Stage Influence on Lactoperoxidase System Compounds in Dairy Ewe Milk", J. Dairy Sci., Vol. 84, pages 1829 to 1835, describes in a very specific manner the concentration of compounds of said lactoperoxidase system (LPS) at different analysis times during the lactation period in ewe milk, especially in menchega ewe milk.

However, neither of the two aforementioned scientific publications refers to the specific practical use of said lactoperoxidase system in a complex technical field, especially not with respect to the cleaning of equipment for producing or processing dairy products.

In very contrast to these scientific publications, applicant has now found that said naturally occurring lactoperoxidase system (LPS) is surprisingly applicable on an industrial level in a complex technical field, namely with respect to the cleaning of equipment for the producing or processing dairy products, when a peroxide-containing solution is contacted with equipment soiled with dairy products comprising lactoperoxidase and thiocyanate.

In particular, the antimicrobial performance of the used hydrogen peroxide, which is known per se due to its high oxidative potential, is increased in a synergistic manner by the presence of lactoperoxidase (LP) and thiocyanate, which both originate from the dairy products to be removed. Thus, a synergistic effect based on the lactoperoxidase system (LPS) is provided by the present invention.

Consequently, the method according to the present invention has the decisive advantage that it activates said lactoperoxidase system which is resident in the respective dairy products remaining in the equipment for producing or processing said dairy products. Thus, the present invention also relates to the activation of an intrinsic disinfection system ("self-disinfection"). As a consequence, no further addition of specific disinfecting and cost-intensive chemicals, like chlorine containing compounds, is required, which are often critical with respect to their environmental properties and with respect to their influence on foodstuff, i.e. dairy products. In very contrast to this, the method of the present invention exhibits the decisive advantage that it is a very mild method based on a natural biologic system which is inherent within the dairy products to be removed.

Furthermore, if necessary or appropriate due to application requirements, the performance of said lactoperoxidase system (LPS) may be modified or increased by the supplementary addition of lactoperoxidase (LP), and thiocyanate(s) to the cleaning solution containing the peroxidase(s).

In such a case, the respective lactoperoxidase (LP) may preferably be a naturally occurring lactoperoxidase (LP), which may be e.g. isolated separately from raw milk or products therefrom using methods and techniques well known in prior art.

Said supplementary addition of lactoperoxidase (LP), and of said thiocyanate(s) may be performed by using separate solutions and/or by adding said lactoperoxidase (LP), and said thiocyanate to said peroxide-containing solution. However, it is preferred that no supplementary addition of the aforementioned peroxidas and/or thiocyanate(s) is performed, i.e. the peroxidase and/or the thiocyanate(s) should preferably originate from the dairy products to be removed themselves.

For the specific embodiment according to which the supplementary addition of lactoperoxidase to the cleaning solution is necessary or appropriate due to application requirements, the cleaning solution may comprise lactoperoxidase, preferably in the range of from 0.1 to 15 mg/kg, especially from 0.2 to 10 mg/kg, preferably from 0.3 to 5 mg/kg, based on the total weight of said solution. However, it might be possible to deviate from these ranges if it is appropriate or required according to application necessities.

If supplementary addition of thiocyanate(s) to the cleaning solution is necessary or appropriate due to application requirements, the peroxide-containing solution may comprise thiocyanate(s) in the range of from 50 to 4,000 µg/kg, especially from 100 to 2,000 µg/kg, preferably from 200 to 1,000 µg/kg, based on the total weight of said solution. However, it might be possible to deviate from these ranges if it is appropriate or required according to application necessities.

With respect to the aforementioned case, i.e. the supplementary addition of lactoperoxidase, and/or thiocyanate(s) to the cleaning solution, said supplementary addition of lactoperoxidase, and/or of thiocyanate(s) should be performed in order to modify or increase the cleaning performance of the method according to the present invention. For instance, said supplementary addition should be performed when the content of lactoperoxidase, and/or thiocyanate(s) within the dairy products to be removed is not sufficient with respect to the desired cleaning effect.

Thus, according to the present invention, it is possible to adapt the respective content of each component of the lactoperoxidase system (LPS), i.e. the naturally occurring peroxidase(s), especially lactoperoxidase (LP), the natural occurring thiocyanate(s) (SCN-) and the hydrogen peroxide, in order to modify or increase the cleaning and/or disinfecting performance of the entire system.

For each component of said lactoperoxidase system (LPS), its respective amount may be chosen in an amount effective to kill said microorganisms and/or to prevent or inhibit the growth thereof.

Furthermore, according to the present invention, said peroxide-containing solution may comprise one or more further ingredients and/or additives.

For instance, the hydrogen peroxide-containing solution may comprise at least one surfactant, preferably in the range of from 10 to 3.000 mg/kg, especially from 20 to 1.000 mg/kg, preferably from 50 to 300 mg/kg, based on the total weight of said solution. However, it might be possible to deviate from these ranges if it is appropriate or required according to application necessities.

The surfactant may be added in order to increase the effect of cleaning and/or disinfection of said equipment, especially with respect of the removal of particularly fatty residues within said equipment. Surfactants usable according to the present invention may be all types of surfactants conventionally used in cleaning agents, especially for industrial applications. According to the present invention, the respective surfactants may be chosen from the group consisting of ionic (i.e. cationic, anionic, zwitterionic) and nonionic surfactants. The surfactants to be used should be compatible with the lactoperoxidase system.

According to the present invention, said dairy products to be removed from said equipment may comprise milk, especially raw milk or processed milk or products derived therefrom. Examples for processed milk are pasteurized milk, skimmed milk and long-life milk. Furthermore, said dairy products may also comprise diverse milk-containing products, e.g. cheese, curd cheese, yoghurt and milk-containing drinks. For the reasons mentioned above, the aforementioned dairy products should contain at least one peroxidase, especially lactoperoxidase, by natural occurrence and/or at least one thiocyanate by natural occurrence.

In particular, the cleaning method of the present invention is applicable in all fields where lactoperoxidase, and/or thiocyanate(s) are provided by the soils or contaminations to be removed from equipment used for the production and/or processing of foodstuff containing the respective lacto per-oxidase and/or thiocyanate(s). In this context, besides the area of dairy products, i.e. especially the production and processing of milk, the area of vegetables may be another area where the present invention may be used.

According to the present invention, the inventive cleaning method may be run in a broad temperature range, especially in a temperature range of from 15 to 70 °C, especially from 40 to 70 °C. Preferably, the inventive method may be performed in the temperature range of from 40 to 70 °C. However, it might be possible to deviate from these ranges if it is appropriate or required according to application necessities. In order not to inhibit the LP system and in order to reach an optimum activity of the LP system, temperatures should not be selected too excessive, especially not too high.

According to the present invention, a subsequent rinsing, preferably with water, of said equipment may be performed after treating, especially after contacting and rinsing said equipment with said hydrogen peroxide-containing solution. This so-called post-rinse step may be performed in order to prevent a new contamination and/or spoilage after the cleaning process and/or to remove eventually remaining residues of the peroxide-containing solution within said equipment. The rinsing medium is preferably water, eventually supplemented with diverse additives, like preserving agents. However, the aforementioned post-rinse step is not compulsorily required according to the present invention. Due to hygiene requirements, a post-rinse step may be mandatory by law in some countries.

Also, the present invention relates to a method of cleaning equipment for producing or processing dairy products, said equipment being soiled with said dairy products, wherein said method comprises the activation of a lactoperoxidase system (LPS). According to this aspect of the present invention, said activation may be realized by treating, especially by contacting and rinsing said equipment with a solution containing hydrogen peroxide as described above.

According to a second aspect of the present invention, the present invention also relates to the use of hydrogen peroxide for the cleaning of equipment for producing or processing dairy products, said equipment being still soiled with said dairy products.

According to the present invention hydrogen peroxide is used. For further details, reference is made to the above explanations which apply accordingly.

Furthermore, said hydrogen peroxide is applied in combination with lactoperoxidase, originating from said dairy products to be removed from said equipment. Also, said thiocyanate is especially a naturally occurring thiocyanate, originating from said dairy products to be removed from said equipment.

Also, the present invention relates to a use of hydrogen peroxide, for the activation of a lactoperoxidase system (LPS), wherein said activation is realized by the combination of said hydrogen peroxide with at least one lactoperoxidase and with at least one thiocyanate. As described above, said lactoperoxidase and/or said thiocyanate are in general naturally occurring components within said dairy products.

For further details with respect to the inventive use, reference can be made to the above explanations with respect to the method of the present invention, which also apply to the inventive use accordingly.

The method and the use of the present invention lead to a great number of advantages:

The method of the present invention replaces the conventional processes of e.g. rinsing said equipment with a chlorine-containing solution, which are often related to great environmental problems and have to be performed with a large number of steps, e.g. a pre-rinse step followed by at least one subsequent rinse step and at least one post-rinse step.

The present invention exhibits the advantage that the inventive method neither requires a pre-rinse cleaning step nor requires the application of chlorine-containing disinfecting agents. Thus, the present invention is highly compatible with respect to environmental requirements and is further associated with less expenditure due to lower water and energy consumption.

Due to the impressive reduction of the use of water and due to the renunciation of chlorine, the present invention provides great advantages with respect to environmental aspects and human health on the one hand and with respect to a better economy on the other hand.

Furthermore, the present invention provides an effective means to replace chlorine in formulations for cleaning and/or disinfecting equipment for the production and processing of dairy products.

The present invention relates to the activation of a mild, naturally occurring biological system with so-to-speak "self-disinfecting" properties, namely a lactoperoxidase system (LPS), and this in an effective manner on an industrial level with a high degree of complexity and throughput.

With respect to the cleaning and/or disinfection of said equipment, the performance of the inventive method can individually be adapted by the selective addition of the respective components of the lactoperoxidase system (LPS), i.e. lactoperoxidase (LP), thiocyanate(s) (SCN⁻) and hydrogen peroxide.

Further embodiments, aspects, variations and advantages of the present invention will be understood by the skilled practitioner when reading the description, without him leaving the scope of the present invention.

The present invention will be illustrated by the following Examples, which, however, do not limit the present invention.

### EXAMPLES:

### Example 1:

Milking equipment (from applicant's laboratory) is soiled with raw milk (coming from a farm). This equipment is cleaned with different products without a pre-rinse step. The cleaning solution is taken at the end of the cleaning step just before this solution is eliminated. The solution is analyzed in a microbiological department for the total mesophilic flora. A control is made by cleaning with water only. This control gives the initial level of the contamination of the equipment.

Products used: Horolith^{®} oxy (VFR 2310-14 from Ecolab) at 0.5 %. This is an aqueous solution comprising hydrogen peroxide and acidified with phosphoric acid.

Horolith^{®} oxy has the following composition:

| | |
|---|---|
| 60 % | phosphoric acid at 75 % (45 % final), |
| 1 % | Dequest^{®} 2000 (containing Aminotri(methylenephosphonic acid) ATMP, purchased by Monsanto), |
| 6.5 % | hydrogen peroxide at 70 %, |
| 1 % | Dehypon^{®} LS 54 (fatty alcohol, C₁₂-C₁₄, with approximately 5 moles EO and 4 moles PO, purchased by Henkel Corporation, Chemicals Group, CD Division), |
| 1 % | Eltesol^{®} ST 90 (Sodiumtoluenesulphonate at 90%, purchased by Huntsman Surface Sciences UK Ltd.). |
| | |

This gives in a 0.5 % solution:

| | |
|---|---|
| 2250 ppm | phosphoric acid, |
| 25 ppm | Dequest^{®} 2000 (used for stabilization of hydrogen peroxide), |
| 227.5 ppm | hydrogen peroxide, |
| 50 ppm | Dehypon^{®} LS 54, |
| 45 ppm | Eltesol^{®} ST 90. |

The experimental data given in this and the following examples represent the concentration of germs in the cleaning solution.

### Results:

| | |
|---|---|
| Cleaning with water: | 30,000 germs/ml |
| Cleaning with Horolith^{®} oxy (i.e. containing H₂O₂): | 35 germs/ml |

### Example 2:

The experimental set-up is comparable to that of Example 1. The aim is to know if the formulation without hydrogen peroxide exhibits an effect on the growth of germs.

| | |
|---|---|
| Cleaning with water: | 6,650 germs/ml |
| Cleaning with Horolith^{®} oxy without H₂O₂: | 3,000 germs/ml |
| Cleaning with Horolith^{®} oxy (i.e. containing H₂O₂): | 400 germs/ml |

### Example 3:

The experimental set-up is comparable to that of Example 1. As the efficiency is linked to enzymatic activation of lactoperoxidase, the activity must be independent of the substrate concentration (here: hydrogen peroxide). The aim of this experiment is to test Horolith^{®} oxy with different contents of hydrogen peroxide. The experiments have been made in different series. The results are given in log reduction versus cleaning with water.

| | |
|---|---|
| 2.84 ppm H₂O₂: | 3.2 log reduction |
| 3.8 ppm H₂O₂: | 3.68 log reduction |
| 15.2 ppm H₂O₂: | 3.66 log reduction |
| 113.8 ppm H₂O₂: | 2.97 log reduction |
| 314.5 ppm H₂O₂: | 3.6 log reduction |

## Claims

1. A method of cleaning equipment for producing or processing dairy products, said equipment being soiled with said dairy products, wherein said method comprises treating said equipment with a solution having a pH-value less than 7 and containing hydrogen peroxide in the range of from 0.01 to 0.2 % by weight, based on the total weight of said solution, wherein said treating of said equipment with said hydrogen peroxide-containing solution is performed without a preceding pre-rinse step so that said treating of said equipment with said hydrogen peroxide-containing solution is performed in the presence of at least one peroxidase and of at least one thiocyanate, wherein said peroxidase is a naturally occurring lactoperoxidase originating from said dairy products to be removed from said equipment and said thiocyanate is a naturally occurring thiocyanate originating from said dairy products to be removed from said equipment.

2. The method according to Claim 1, wherein said treating comprises the step(s) of contacting and/or rinsing said equipment with said solution containing hydrogen peroxide, and/or
wherein said hydrogen peroxide-containing solution is an aqueous solution, and/or
wherein the amount of said hydrogen peroxide in said hydrogen peroxide-containing solution is in the range of from 0.01 to 0.05 % by weight, preferably from 0,02 to 0.03 % by weight, based on the total weight of said solution, and/or
wherein said hydrogen peroxide-containing solution is an acidic solution, especially with a pH-value less than or equal 6, more preferably less than or equal 5, and/or wherein said hydrogen peroxide-containing solution is acidified with at least one organic and/or inorganic acid, especially phosphoric acid.

3. The method according to any of the preceding Claim, wherein said hydrogen peroxide-containing solution comprises further ingredients, wherein, preferably, said hydrogen peroxide-containing solution comprises at least one surfactant, preferably in the range of from 10 to 3,000 mg/kg,
especially from 20 to 1,000 mg/kg, preferably from 50 to 300 mg/kg, based on the total weight of said solution, and/or
said hydrogen peroxide-containing solution comprises at least one thiocyanate, preferably in the range of from 50 to 4,000 µg/kg, especially from 100 to 2,000 µg/kg, preferably from 200 to 1,000 µg/kg, based on the total weight of said solution, and/or wherein said hydrogen peroxide-containing solution comprises at least one peroxidase, especially lactoperoxidase, preferably in the range of from 0.1 to 15 mg/kg, especially from 0.2 to 10 mg/kg, preferably from 0.3 to 5 mg/kg, based on the total weight of said solution.

4. The method according to any of the preceding Claims, wherein said dairy products comprise milk, especially raw milk or processed milk or products derived therefrom, and/or
wherein said dairy products contain at least one peroxidase, especially lactoperoxidase, by natural occurrence and/or at least one thiocyanate by natural occurrence.

5. The method according to any of the preceding Claims, wherein a subsequent rinsing, preferably with water, of said equipement is performed after treating, especially after contacting and rinsing said equipment with said hydrogen peroxide-containing solution.

6. A method of cleaning equipment for producing or processing dairy products, said equipment being soiled with said dairy products, wherein said method comprises the activation of the lactoperoxidase system (LPS) present by the residues of said dairy products in the equipment,
wherein, preferably, said activation is realized by treating, especially contacting and rinsing said equipment with a solution containing hydrogen peroxide.

7. Use of hydrogen peroxide in the form of an acidic solution having a pH-value less than 7 and comprising hydrogen peroxide in an amount in the range of from 0.01 to 0.2 % by weight, based on the total weight of said solution, for the activation of a lactoperoxidase system (LPS) in a method
of cleaning equipment for producing or processing dairy products, said equipment being soiled with said dairy products, wherein said activation is realized by the combination of said hydrogen peroxide with at least one lactoperoxidase and with at least one thiocyanate, wherein said lactoperoxidase and said thiocyanate are naturally occurring within said dairy products, wherein said treating of said equipment with said hydrogen peroxide-containing solution is performed without a preceding pre-rinse step so that said treating of said equipment with said hydrogen peroxide-containing solution is performed in the presence of said lactoperoxidase and said thiocyanate.

8. The use according to Claim 7, wherein said hydrogen peroxide is applied as a preferably acidic solution, especially as an aqueous solution, said lactoperoxidase containing solution further comprising at least one organic and/or inorganic acid and optionally one or more further ingredients, such as surfactants,

9. The use according to Claim 7 or 8, wherein said dairy products comprise milk, especially raw milk or processed milk or products derived therefrom.

## Patentansprüche

1. Verfahren zum Reinigen von Ausrüstung zur Herstellung oder Verarbeitung von Milchprodukten, wobei die Ausrüstung mit den Milchprodukten verschmutzt ist, wobei das Verfahren das Behandeln der Ausrüstung mit einer Lösung umfasst, die einen pH-Wert unter 7 hat und Wasserstoffperoxid im Bereich von 0,01 bis 0,2 Gew.-%, bezogen auf das Gesamtgewicht der Lösung, enthält, wobei das Behandeln der Ausrüstung mit der Wasserstoffperoxid enthaltenden Lösung ohne einen vorhergehenden Vorspülschritt durchgeführt wird, so dass das Behandeln der Ausrüstung mit der Wasserstoffperoxid enthaltenden Lösung in Gegenwart mindestens einer Peroxidase und mindestens eines Thiocyanats erfolgt, wobei die Peroxidase eine natürlich vorkommende Lactoperoxidase ist und aus den Milchprodukten stammt, die aus der Ausrüstung entfernt werden sollen, und das Thiocyanat ein natürlich vorkommendes Thiocyanat ist und aus den Milchprodukten stammt, die aus der Ausrüstung entfernt werden sollen.

2. Verfahren nach Anspruch 1, wobei das Behandeln den (die) Schritt(e) In-Kontakt-Bringen und/oder Spülen der Ausrüstung mit der Wasserstoffperoxid enthaltenden Lösung umfasst und/oder
wobei die Wasserstoffperoxid enthaltende Lösung, eine wässrige Lösung ist und/oder
wobei die Menge an Wasserstoffperoxid in der Wasserstoffperoxid enthaltenden Lösung im Bereich von 0,01 bis 0,05 Gew.-%, vorzugsweise von 0,02 bis 0,03 Gew.-%, bezogen auf das Gesamtgewicht der Lösung, liegt und/oder
wobei die Wasserstoffperoxid enthaltende Lösung, eine saure Lösung ist, insbesondere mit einem pH-Wert von weniger als oder gleich 6, stärker bevorzugt weniger als oder gleich 5, und/oder wobei die Wasserstoffperoxid enthaltende Lösung mit mindestens einer organische und/oder anorganischen Säure, insbesondere Phosphorsäure, angesäuert wird.

3. Verfahren nach einem der vorhergehenden Ansprüche, wobei die Wasserstoffperoxid enthaltende Lösung weitere Inhaltsstoffe umfasst, wobei die Wasserstoffperoxid enthaltende Lösung vorzugsweise mindestens ein oberflächenaktives Mittel, vorzugsweise im Bereich von 10 bis 3000 mg/kg, insbesondere von 20 bis 1000 mg/kg, vorzugsweise von 50 bis 300 mg/kg, bezogen auf das Gesamtgewicht der Lösung, umfasst und/oder
die Wasserstoffperoxid enthaltende Lösung mindestens ein Thiocyanat, vorzugsweise im Bereich von 50 bis 4000 µg/kg, insbesondere von 100 bis 2000 µg/kg, vorzugsweise von 200 bis 1000 µg/kg, bezogen auf das Gesamtgewicht der Lösung, umfasst und/oder wobei die Wasserstoffperoxid enthaltende Lösung mindestens eine peroxidase, insbesondere Lactoperoxidase, vorzugsweise im Bereich von 0,1 bis 15 mg/kg, insbesondere von 0,2 bis 10 mg/kg, vorzugsweise von 0,3 bis 5 mg/kg, bezogen auf das Gesamtgewicht der Lösung, umfasst.

4. Verfahren nach einem der vorhergehenden Ansprüche, wobei die Milchprodukte Milch, insbesondere Rohmilch oder verarbeitete Milch oder davon stammende Produkte, umfassen und/oder
wobei die Milchprodukte mindestens eine Peroxidase, insbesondere Lactoperoxidase, aufgrund von natürlichem Vorkommen und/oder mindestens ein Thiocyanat aufgrund von natürlichem Vorkommen enthalten.

5. Verfahren nach einem der vorhergehenden Ansprüche, wobei ein anschließendes Spülen, vorzugsweise mit Wasser, der Ausrüstung nach dem Behandeln, insbesondere nach dem In-Kontakt-Bringen und Spülen der Ausrüstung mit der Wasserstoffperoxid enthaltenden Lösung, durchgeführt wird.

6. Verfahren zum Reinigen von Ausrüstung zur Herstellung oder Verarbeitung von Milchprodukten, wobei die Ausrüstung mit den Milchprodukten verschmutzt ist, wobei das Verfahren die Aktivierung des vorhandenen Lactoperoxidase-Systems (LPS) durch die Rückstände der Milchprodukte in der Ausrüstung umfasst,
wobei die Aktivierung vorzugsweise durchgeführt wird, indem man die Ausrüstung mit einer Wasserstoffperoxid enthaltenden Lösung behandelt, insbesondere in Kontakt bringt und spült.

7. Verwendung von Wasserstoffperoxid in Form einer sauren Lösung mit einem pH-Wert unter 7, die Wasserstoffperoxid in einer Menge im Bereich von 0,01 bis 0,2 Gew.-%, bezogen auf das Gesamtgewicht der Lösung, umfasst, zur Aktivierung des Lactoperoxidase-Systems (LPS) bei einem Verfahren zum Reinigen von Ausrüstung zur Herstellung oder Verarbeitung von Milchprodukten, wobei die Ausrüstung mit den Milchprodukten verschmutzt ist, wobei die Aktivierung durchgeführt wird, indem man das Wasserstoffperoxid mit mindestens einer Lactoperoxidase und mit mindestens einem Thiocyanat zusammenbringt, wobei die Lactoperoxidase und das Thiocyanat in den Milchprodukten natürlicherweise vorkommen, wobei das Behandeln der Ausrüstung mit der Wasserstoffperoxid enthaltenden Lösung ohne einen vorhergehenden Vorspülschritt durchgeführt wird, so dass das Behandeln der Ausrüstung mit der Wasserstoffperoxid enthaltenden Lösung in Gegenwart der Lactoperoxidase und des Thiocyanats erfolgt.

8. Verwendung nach Anspruch 7, wobei das Wasserstoffperoxid als eine vorzugsweise saure Lösung, insbesondere als eine wässrige Lösung aufgebracht wird, wobei die Lactoperoxidase enthaltende Lösung weiterhin mindestens eine organische und/oder anorganische Säure und gegebenenfalls einen oder mehrere weitere Inhaltsstoffe, wie oberflächenaktive Mittel, umfasst.

9. Verwendung nach Anspruch 7 oder 8, wobei die Milchprodukte Milch, insbesondere Rohmilch oder verarbeitete Milch oder davon stammende Produkte, umfassen.

## Revendications

1. Procédé de nettoyage d'équipement destiné à produire ou à traiter des produits laitiers, ledit équipement étant souillé par lesdits produits laitiers, ledit procédé comprenant le traitement dudit équipement avec une solution ayant une valeur de pH inférieure à 7 et contenant du peroxyde d'hydrogène dans la gamme de 0,01 à 0,2 % en poids, sur la base du poids total de ladite solution, ledit traitement dudit équipement avec ladite solution contenant du peroxyde d'hydrogène étant effectué sans étape de pré-rinçage préalable de sorte que ledit traitement dudit équipement avec ladite solution contenant du peroxyde d'hydrogène soit effectué en présence d'au moins une peroxydase et d'au moins un thiocyanate, ladite peroxydase étant une lactoperoxydase naturelle provenant desdits produits laitiers à éliminer dudit équipement et ledit thiocyanate étant un thiocyanate naturel provenant desdits produits laitiers à éliminer dudit équipement.

2. Procédé selon la revendication 1, **caractérisé en ce que** ledit traitement comprend la ou les étapes de mise en contact et/ou de rinçage dudit équipement avec ladite solution contenant du peroxyde d'hydrogène, et/ou
**en ce que** ladite solution contenant du peroxyde d'hydrogène est une solution aqueuse, et/ou
**en ce que** la quantité dudit peroxyde d'hydrogène dans ladite solution contenant du peroxyde d'hydrogène est dans la gamme de 0,01 à 0,05 % en poids, de préférence de 0,02 à 0,03 % en poids, sur la base du poids total de ladite solution, et/ou
**en ce que** ladite solution contenant du peroxyde d'hydrogène est une solution acide, notamment ayant une valeur de pH inférieure ou égale à 6, plus préférablement inférieure ou égale à 5, et/ou en ce que ladite solution contenant du peroxyde d'hydrogène est acidifiée avec au moins un acide organique et/ou minéral, notamment de l'acide phosphorique.

3. Procédé selon l'une ou l'autre des revendications 1 et 2, **caractérisé en ce que** ladite solution contenant du peroxyde d'hydrogène comprend d'autres ingrédients, **en ce que**, de préférence, ladite solution contenant du peroxyde d'hydrogène comprend au moins un tensioactif, de préférence dans la gamme de 10 à 3 000 mg/kg, notamment de 20 à 1 000 mg/kg, de préférence de 50 à 300 mg/kg, sur la base du poids total de ladite solution, et/ou
ladite solution contenant du peroxyde d'hydrogène comprend au moins un thiocyanate, de préférence dans la gamme de 50 à 4 000 µg/kg, notamment de 100 à 2 000 µg/kg, de préférence de 200 à 1 000 µg/kg, sur la base du poids total de ladite solution, et/ou **en ce que** ladite solution contenant du peroxyde d'hydrogène comprend au moins une peroxydase, notamment de la lactoperoxydase, de préférence dans la gamme de 0,1 à 15 mg/kg, notamment de 0,2 à 10 mg/kg, de préférence de 0,3 à 5 mg/kg, sur la base du poids total de ladite solution.

4. Procédé selon l'une quelconque des revendications précédentes, **caractérisé en ce que** lesdits produits laitiers comprennent le lait, notamment le lait cru ou le lait transformé ou les produits dérivés de ceux-ci, et/ou
**en ce que** lesdits produits laitiers contiennent au moins une peroxydase, notamment de la lactoperoxydase, de façon naturelle et/ou au moins un thiocyanate de façon naturelle.

5. Procédé selon l'une quelconque des revendications précédentes, **caractérisé en ce qu'**un rinçage ultérieur, de préférence avec de l'eau, dudit équipement est effectué après le traitement, notamment après la mise en contact et le rinçage dudit équipement avec ladite solution contenant du peroxyde d'hydrogène.

6. Procédé de nettoyage d'équipement destiné à produire ou à traiter des produits laitiers, ledit équipement étant souillé par lesdits produits laitiers, **caractérisé en ce que** ledit procédé comprend l'activation du système lactoperoxydase (LPS) présent par les résidus desdits produits laitiers dans l'équipement,
et **en ce que**, de préférence, ladite activation est réalisée par traitement, notamment par mise en contact et rinçage dudit équipement avec une solution contenant du peroxyde d'hydrogène.

7. Utilisation du peroxyde d'hydrogène sous forme d'une solution acide ayant une valeur de pH inférieure à 7 et comprenant du peroxyde d'hydrogène dans une quantité dans la gamme de 0,01 à 0,2 % en poids, sur la base du poids total de ladite solution, pour l'activation d'un système lactoperoxydase (LPS) dans un procédé de nettoyage d'équipement destiné à produire ou à traiter des produits laitiers, ledit équipement étant souillé par lesdits produits laitiers, **caractérisée en ce que** ladite activation est réalisée par la combinaison dudit peroxyde d'hydrogène avec au moins une lactoperoxydase et avec au moins un thiocyanate, **en ce que** ladite lactoperoxydase et ledit thiocyanate se trouvent de façon naturelle dans lesdits produits laitiers, **en ce que** ledit traitement dudit équipement avec ladite solution contenant du peroxyde d'hydrogène est effectué sans étape de pré-rinçage préalable de sorte que ledit traitement dudit équipement avec ladite solution contenant du peroxyde d'hydrogène soit effectué en présence de ladite lactoperoxydase et dudit thiocyanate.

8. Utilisation selon la revendication 7, **caractérisée en ce que** ledit peroxyde d'hydrogène est appliqué en solution de préférence acide, notamment en solution aqueuse, ladite solution contenant de la lactoperoxydase comprenant en outre au moins un acide organique et/ou minéral et éventuellement un ou plusieurs autres ingrédients, tels que des tensioactifs.

9. Utilisation selon la revendication 7 ou 8, **caractérisée en ce que** lesdits produits laitiers comprennent le lait, notamment le lait cru ou le lait transformé ou des produits issus de ceux-ci.
